# EUROPEAN PATENT APPLICATION

(11) **EP 1 850 249 A2**
(43) Date of publication of application: **31.10.2007**
(21) Application number: 07105878.8
(22) Date of filing: 10.04.2007
(51) Int. Cl.: G06F 17/30

(54) **Information processing apparatus, information processing method, and program**

(30) Priority: 11.04.2006 JP 2006108984
(71) Applicant: Sony Corporation, Minato-ku Tokyo 108-0075 (JP)
(72) Inventor: Tanaka, Keisuke, Tokyo 108-0075 (JP); Genba, Naoko, Tokyo 108-0075 (JP); Sheng, Zhongyao, Tokyo 108-0075 (JP); Lin, Jianfeng, Tokyo 108-0075 (JP)
(74) Representative: Körber, Martin Hans

(57) **Abstract**

An information processing apparatus (1) includes a display controller (111) configured to display a first window that includes an information display area in which information associated with content is displayed and a second window having an input box for entering search reference information in the proximity of the first window when predetermined information is selected from the information displayed in the information display area, thereby displaying the selected predetermined information into the input box.

## Description

### CROSS REFERENCES TO RELATED APPLICATIONS

The present invention contains subject matter related to Japanese Patent Application JP 2006-108984 filed in the Japan Patent Office on April 11, 2006, the entire contents of which being incorporated herein by reference.

### BACKGROUND OF THE INVENTION

### 1. Field of the Invention

The present invention relates to an information processing apparatus, an information processing method, and a program and, more particularly, to an information processing apparatus, an information processing method, and a program configured to easily display a window having a box in which a plurality of keywords for example can be entered.

### 2. Description of the Related Art

Some of recently marketed consumer-use recording devices, such as hard disk recorders, have capabilities in which, when the user presses a predetermined button of a controller of a recording device during viewing of a program, keywords of the program being viewed are automatically extracted from program detail information contained in EPG (Electronic Program Guide) data and one of the extracted keywords is set a reference keyword by which a search operation is executed for a program to be recorded.

Proposed recording device capabilities of using keywords extracted from program information include one in which a keyword selected by the user is transmitted to a search server over the Internet and a list of Web sites retrieved by the search server on the basis of the transmitted keyword is displayed, for example. This capability allows the user to easily find program-associated Web sites.

For example, a screen using this search capability displays program cast, program titles, and so on are displayed in the form of user-selectable keywords and, when the user selects one of the keywords, a search operation is executed, the retrieved Web sites being displayed in the form of a list.

### SUMMARY OF THE INVENTION

However, with the above-mentioned proposed search capabilities provided on recording devices, a search operation is triggered immediately after the selection of one keyword, so that it is difficult for the user to select two or more keywords at a time and search for the information that is associated with all of the selected keywords, which is known as narrowing-down search (or AND search).

Therefore, the present invention addresses the above-identified and other problems associated with related-art methods and apparatuses and solves the addressed problems by providing an information processing apparatus, an information processing method, and a program that can easily display a window arranged with an input box in which two or more keywords, for example, providing search references can be entered.

In carrying out the invention and according to one embodiment thereof, there is provided an information processing apparatus. This information processing apparatus has a display controller configured to display a first window that includes an information display area in which information associated with content is displayed and a second window having an input box for entering search reference information in the proximity of the first window when predetermined information is selected from the information displayed in the information display area, thereby displaying the selected predetermined information into the input box.

The above-mentioned display controller can display the above-mentioned first window that further includes a video display area in which a video of the above-mentioned content is displayed.

The information to be displayed in the above-mentioned information display area is a word. In this case, the information processing apparatus can further have a searcher configured to search for information associated with the word displayed in the above-mentioned input box by the display controller.

If another piece of information is selected from the information displayed in the information display area with the second window displayed, the display controller can display the selected another piece of information into the input box along with the previously selected predetermined information.

The information displayed in the information display area is a word. The information processing apparatus further can have a searcher configured to search for information associated with both of the word previously displayed in the input box by the display controller and the word subsequently displayed in the input box.

In carrying out the invention and according to another embodiment thereof, there is provided an information processing method. This method has the steps of displaying a first window that includes an information display area in which information associated with content is displayed; displaying a second window having an input box for entering search reference information in the proximity of the first window when predetermined information is selected from the information displayed in the information display area; and displaying the selected predetermined information into the input box.

In one embodiment of the invention, a first window that includes an information display area in which information associated with content is displayed is displayed and, when predetermined information is selected from the information displayed in the information display area, a second window having an input box in which search reference information is entered is displayed in the proximity of the first window. The selected predetermined information is displayed in this input box.

In another embodiment of the invention, the user can easily display a window having an input box in which a plurality of search keywords as a search reference, for example, are entered.

### BRIEF DESCRIPTION OF THE DRAWINGS

FIG. 1 is a block diagram illustrating an exemplary hardware configuration of a personal computer associated with one embodiment of the invention;
FIG. 2 shows an exemplary screen to be displayed on a display monitor;
FIG. 3 shows the screen shown in FIG. 2 in a partially expanded manner;
FIG. 4 shows another exemplary screen to be displayed on the display monitor;
FIG. 5 shows still another exemplary screen to be displayed on the display monitor;
FIG. 6 shows yet another exemplary screen to be displayed on the display monitor;
FIG. 7 shows a keyword input window shown in FIG. 6 in a expanded manner;
FIG. 8 shows another exemplary screen to be display on the display monitor;
FIG. 9 shows an exemplary display position of the keyword input window;
FIG. 10 shows another exemplary display position of the keyword input window;
FIG. 11 shows an exemplary display of the keyword input window;
FIG. 12 shows still another exemplary screen to be displayed on the display monitor;
FIG. 13 is a block diagram illustrating an exemplary functional configuration of the personal computer shown in FIG. 1; and
FIG. 14 is a flowchart indicative of search processing to be executed by the personal computer shown in FIG. 1.

### DETAILED DESCRIPTION OF THE PREFERRED EMBODIMENTS

The invention described herein and the embodiments thereof have the following correlation. The description hereof is intended to make sure of the fact that the embodiments supporting the invention described herein are described herein. Therefore, if there is any embodiment that, although described in the description of the preferred embodiment, is not described herein as corresponding to the invention, this does not denote in any manner that such an embodiment does not corresponding to the present invention. Conversely, if any embodiment is described herein as corresponding to the invention, it does not denote in any manner that such an embodiment does not corresponding to other inventions than the present invention.

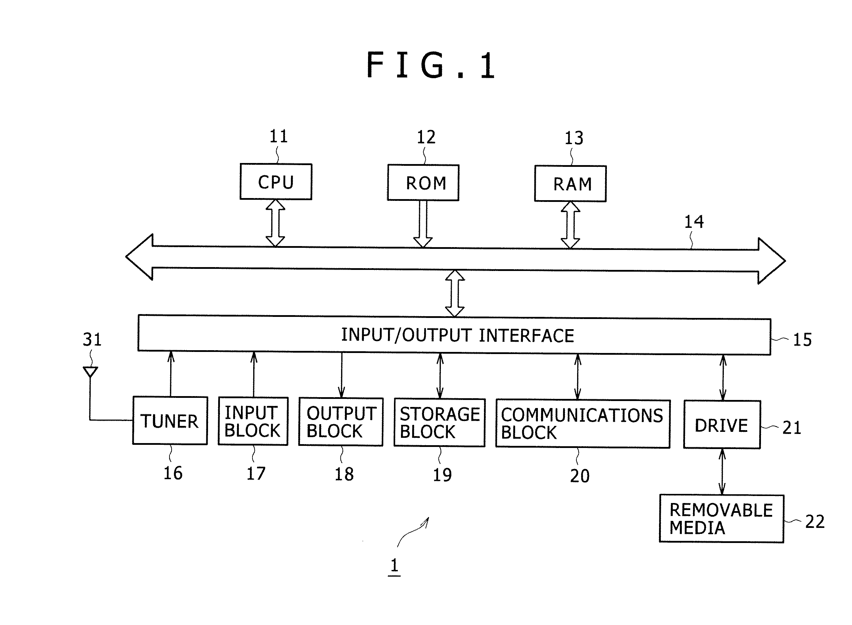

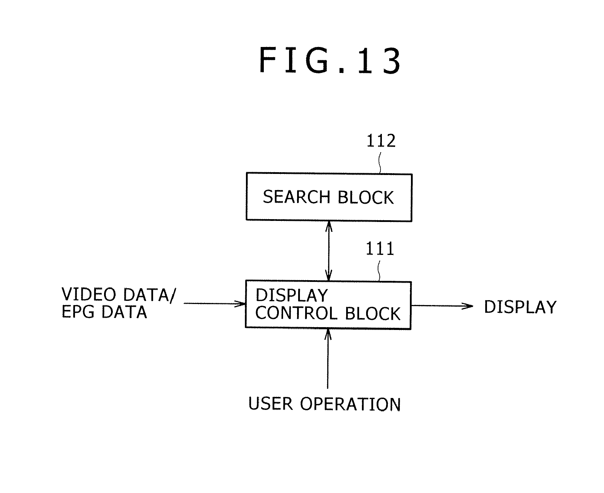

An information processing apparatus (for example, a personal computer 1 shown in FIG. 1) of one embodiment of the invention has a display controller (for example, a display control block 111 shown in FIG. 13) configured to display a first window that includes an information display area in which information associated with content is displayed and a second window having an input box for entering search reference information in the proximity of the first window when predetermined information is selected from the information displayed in the information display area, thereby displaying the selected predetermined information into the input box.

The above-mentioned information processing apparatus can further have a searcher (for example, a search block 112 shown in FIG. 13) configured to search for information associated with the word displayed in the above-mentioned input box by the display controller.

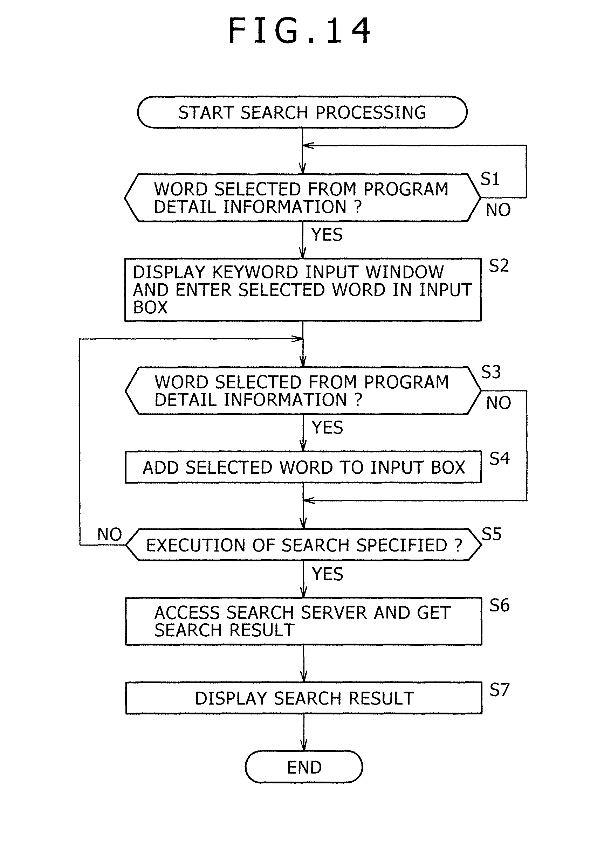

An information processing method or program of another embodiment of the invention has steps of displaying a first window that includes an information display area in which information associated with content is displayed; displaying a second window having an input box for entering search reference information in the proximity of the first window when predetermined information is selected from the information displayed in the information display area; and displaying the selected predetermined information into the input box (for example step S2 shown in FIG 14).

This invention will be described in further detail by way of example with reference to the accompanying drawings.

Now, referring to FIG. 1, there is shown a block diagram illustrating an exemplary hardware configuration of a personal computer associated with one embodiment of the present invention.

A personal computer 1 may be either of notebook type or desktop type.

A CPU (Central Processing Unit) 11 executes various processing operations as instructed by one or more programs stored on a ROM (Read Only Memory) 12 or a storage block 19. A RAM (Random Access Memory) 13 stores, from time to time, one or more programs to be executed by the CPU 11 and data necessary for the execution. The CPU 11, the ROM 12, and the RAM 13 are interconnected by a bus 14.

The CPU 11 is also connected with an input/output interface 15 via the bus 14. The input/output interface 15 is connected to a tuner 16.

The tuner 16 gets the data (video and audio data) and EPG (Electronic Program Guide) data of a program being broadcast on a channel selected by the user from the broadcast waves received at an antenna 31 installed outdoors, for example, and outputs the obtained program data and EPG data to an output block 18 via the input/output interface 15. On the output block 18, program video images and a channel list, for example, are displayed on the basis of the data supplied from the tuner 16.

The broadcast received at the antenna 31 may be any one of ground analog broadcasting, ground digital broadcasting including 1seg (trademark) and BS (Broadcasting Satellite)/CS (Communications Satellite) digital broadcasting.

It is also practicable to get not program data provided by way of broadcast waves but program data supplied from a predetermined server over the Internet to be processed by the personal computer 1. It is also practicable for the EPG data to be obtained not through broadcast waves but over the Internet from a predetermined server.

The input/output interface 15 is connected with an input block 17 having a keyboard and a mouse, for example, and the output block 18 having a display monitor and a loudspeaker, for example. The CPU 11 executes various processing operations as instructed by the user through the input block 17.

A storage block 19 connected to the input/output interface 15 is made up of a hard disk drive, for example, that is configured to store programs to be executed by the CPU 11 and various data, such as program data and EPG data supplied from the tuner 16. These programs to be executed by the CPU 11 include an application program for displaying program video images and the information associated with programs on the basis of the obtained EPG data, for example, onto the display monitor of the personal computer 1. This application program for displaying program video images will be hereafter referred to as an info TV application, as appropriate.

A communications block 20 execute communication with external devices via a network, such as the Internet and a LAN (Local Area Network).

A drive 21 connected to the input/output interface 15 drives a removable media 22, such as a magnetic disk, an optical disk, a magneto-optical disk, or a semiconductor memory, when the removable media 22 is loaded on the drive 21 to get programs and data, for example, recorded to the removable media 22. The obtained programs and data are transferred to and stored in the storage block 19 as occasions demand.

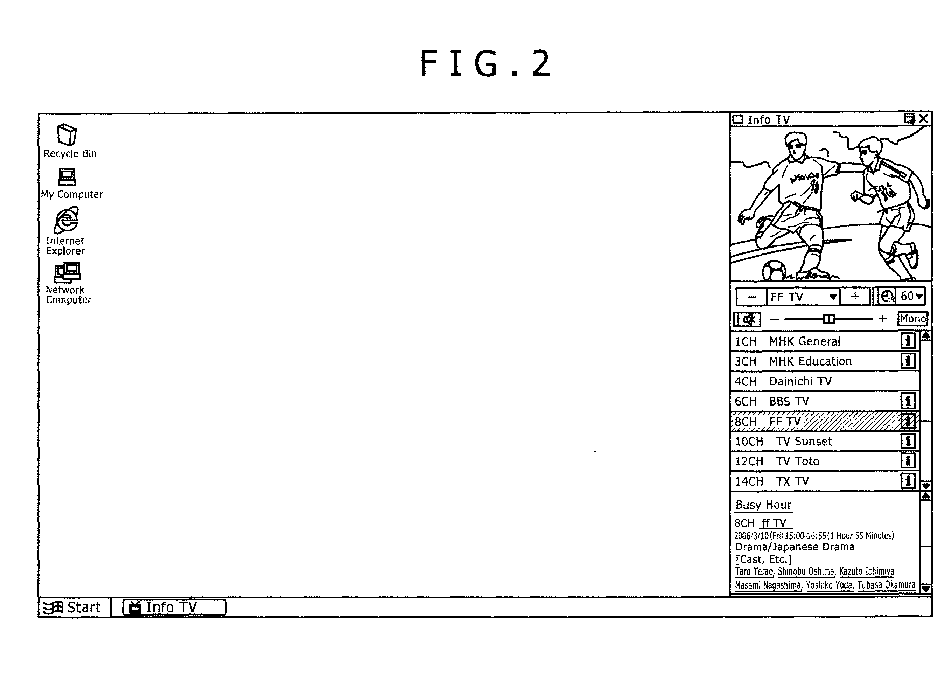

Referring to FIG. 2, there is shown an exemplary screen to be displayed on the display monitor by the above-mentioned info TV application.

When the info TV application is started up, a screen (or a window) including program video images is displayed at the right end of a desktop screen displayed by an OS (Operating System) installed on the personal computer 1 as shown in FIG. 2.

As described, the window including program video images is displayed at an end of the desktop screen, so that the user can display a window for documentation and a window for a Web browser, for example, in other parts of the desktop screen, thereby viewing a program while creating a document and browsing Web sites through these windows.

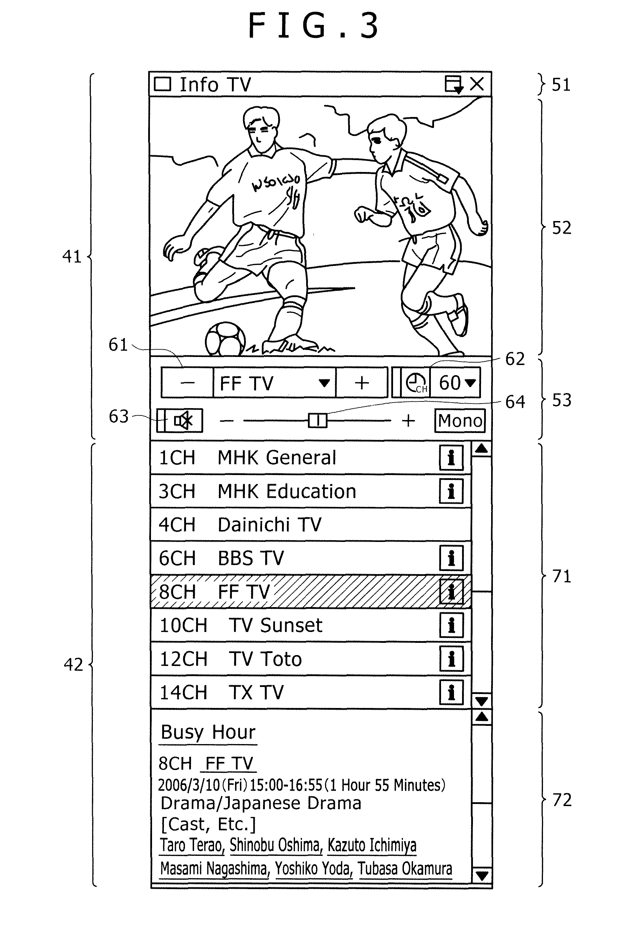

Referring to FIG. 3, there is shown an expanded view of the window shown in FIG. 2 to be displayed by the info TV application.

As shown in FIG. 3, the window to be displayed by the info TV application is basically configured by a program display section 41 and a list display section 42.

The program display section 41 is configured by a title bar 51, a video display section 52, and a control panel 53.

The title bar 51 provides an area in which the name of an application, for example, to be displayed in the window shown in FIG. 3 is displayed. In the example shown in FIG. 3, "Info TV" indicative that the window shown in FIG. 3 is displayed by the info TV application is displayed in the title bar 51. In addition to an application name, the title bar 51 displays a button to be displayed when the window is closed, for example.

The video display section 52 provides an area in which a video image of a program currently broadcast on a channel selected by the user is displayed in a predetermined resolution. The program of which video image is displayed in the video display section 52 is the program being viewed by the user. In the example shown in FIG. 3, the program being viewed by the user is a soccer live coverage.

The control panel 53 provides an area in which controls to be operated by the user to execute various operations on a program being viewed are displayed. In the example shown in FIG. 3, the control panel 53 shows a channel display section 61, a channel timer display section 62, a mute button 63, and a volume control slide bar 64.

The channel display section 61 provides an area in which the channel name (or the broadcast station name) of a channel being received and a +/- button to be operated for channel switching are displayed. In the example shown in FIG. 3, the channel name of "FF TV" is displayed.

The channel timer display section 62 provides an area in which a button to be operated when setting a channel timer and a timer time are displayed. The channel timer capability automatically receives the channel being received when the channel timer capability is turned on when a predetermined period of time (or a predetermined timer time) has passed since the turning on of the channel timer capability even if another channel is being received.

The mute button 63 is operated to mute the sound to be outputted from the loudspeaker. The volume control slide bar 64 is operated to adjust the volume of the sound of a program being viewed.

On the other hand, the list display section 42 that constitutes each window to be displayed by the info TV application along with the program display section 41 is made up of a channel list 71 and a program detail information display section 72 as shown in FIG. 3.

The channel list 71 contains the channel numbers and channel names of receivable channels. The user can select any particular channel from this list by operating the mouse and view the selected channel that is on air.

In the example shown in FIG. 3, "1 CH MHK General", "3 CH MHK Education", "4 CH Dainichi TV" ... "14 CH TX TV" are listed from top to down as the channel numbers and channel names of selectable channels. In addition, in this example, as indicated by shadow, "8 CH FF TV" is selected from the channels listed in the channel list 71. The video image shown in the video display section 52 in FIG. 3 is that of a program being broadcast on this "8 CH FF TV".

It should be noted that an icon representative of letter "i" to the right end of each box of the channel list 71 is indicative that the EPG data of the program to be broadcast on that channel has already been obtained through the Internet, for example.

The program detail information display section 72 provides an area in which the detail information about each program to be broadcast on a channel selected from the channel list 71 is displayed. The detail information is based on EPG data, for example.

In the example shown in FIG. 3, each word, such as a personal name, displayed in the program detail information display section 72 as detail information is underscored to allow the user to select each underscored word by use of the mouse, for example. When a word is selected, a search operation is executed for the information associated with the selected word, for example.

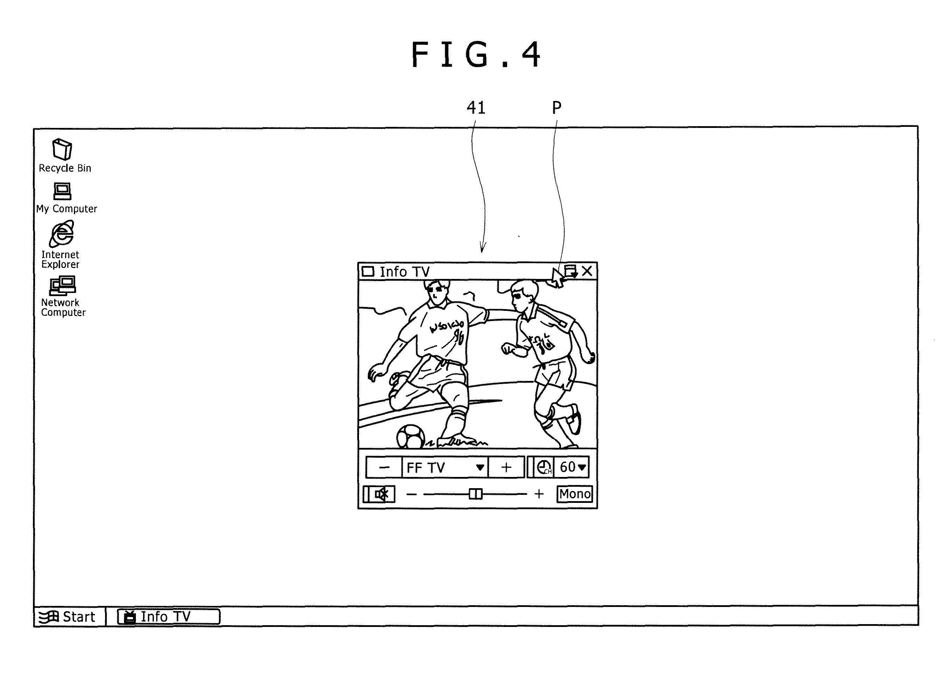

Referring to FIG. 4, there is shown another exemplary screen that is displayed by the info TV application onto the display monitor.

As shown in FIG. 4, only the program display section 41 constituting each window to be displayed by the info TV application along with the list display section 42 can be moved by the user to a desired position.

To be more specific, when a fixed mode for fixing the display position of the program display section 41 along with the list display section 42 is selected as the display mode of the window, the screen shown in FIG. 2 is displayed and, when a floating mode for freely moving the display position of the program display section 41 is selected and the program display section 41 is moved to the approximately the center of the screen, the screen shown in FIG. 4 is displayed. The moving of the display position of the program display section 41 is executed by positioning mouse pointer P to the title bar 51 of the program display section 41 and executing a drag and drop operation, for example, as shown in FIG. 4.

It should be noted that, when the floating mode is selected, the display of the list display section 42 is erased.

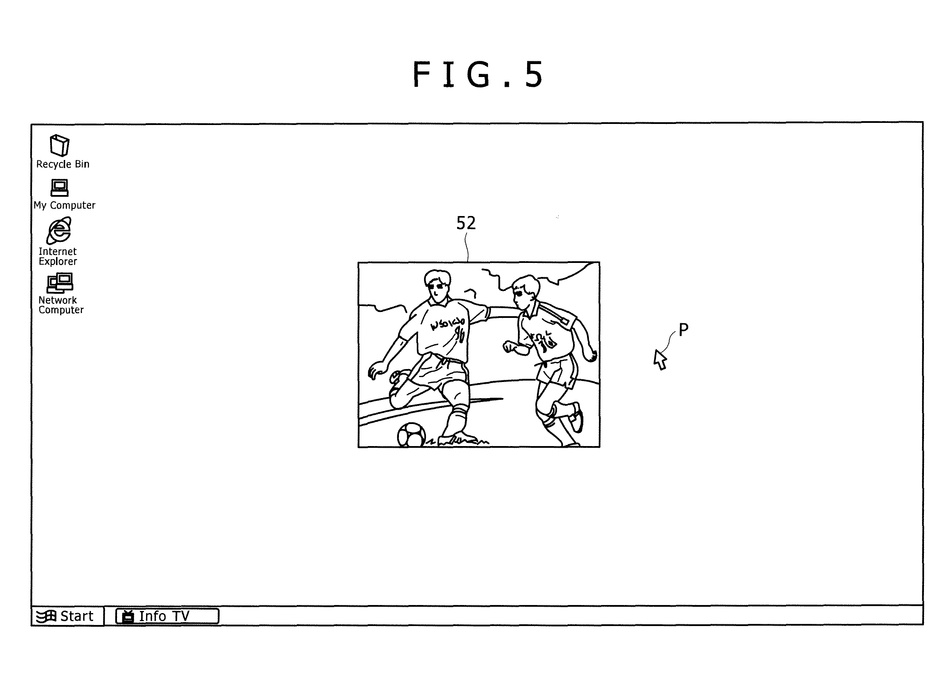

Referring to FIG. 5, there is shown still another exemplary screen to be displayed by the info TV application onto the display monitor.

When mouse pointer P is moved from the state shown in FIG. 4 in which mouse pointer P is positioned to the program display section 41 to the outside thereof, the title bar 51 and the control panel 53 of the program display section 41 disappear, only the video display section 52 being left displayed.

For example, when the user is creating a document with mouse pointer P positioned on the window of a documentation application, the video display section 52 is displayed in a form as shown in FIG. 5. When mouse pointer P is outside the program display section 41, then no button displayed in the control panel 53 is operated, so that the unnecessary display is erased to allow the user to allocate a wider space on the screen to a main job, such as documentation, for example.

The following describes the search capabilities provided by the info TV application.

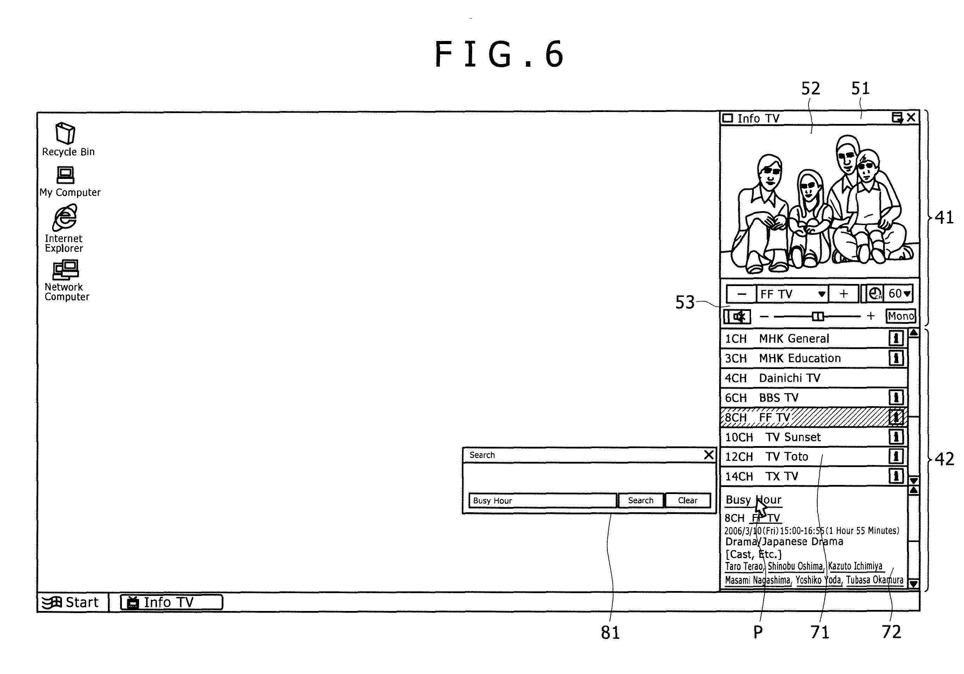

Referring to FIG. 6, there is shown an exemplary screen to be displayed on the display monitor.

In the example shown in FIG. 6, the window of the info TV application is displayed in the fixed mode as with the screen shown in FIG. 2.

For example, when one of words displayed in the program detail information display section 72 is selected as program-associated information, a search engine browser is started up to display a keyword input window 81 in the proximity of the window of the info TV application as shown in FIG. 6.

In the example shown in FIG. 6, mouse pointer P is positioned at word "Busy Hour", a program title displayed in the program detail information display section 72, and is clicked (namely, the mouse is pressed once), upon which "Busy Hour" is selected as a keyword. At the left side of the program detail information display section 72 in which "Busy Hour" is displayed, the keyword input window 81 is displayed in the proximity of the window of the info TV application. In the input box of the keyword input window 81, "Busy Hour", the selected word, is entered.

It should be noted that the search engine browser has capabilities of displaying a keyword selected by the user that provides a reference for searching and transmitting the keyword to a search server on the Internet to make the search server execute a search operation. Results of each search operation are obtained by a Web browser prepared on the personal computer, for example, to be listed in the window of that Web browser.

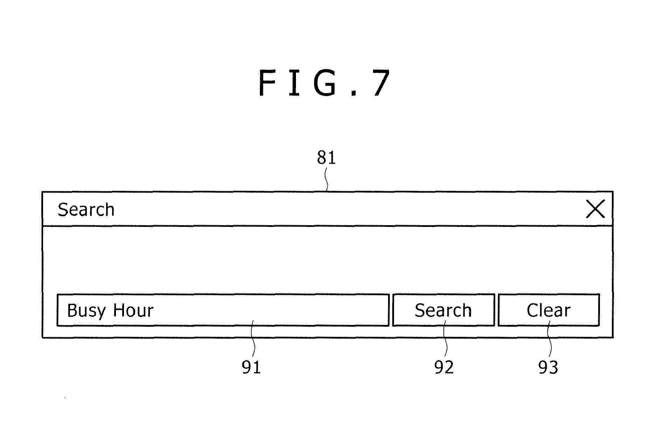

Referring to FIG. 7, there is shown an expanded view of the keyword input window 81 shown in FIG. 6.

As shown in FIG. 7, the keyword input window 81 is arranged with a keyword input box 91, a search start button 92, and a clear button 93.

The keyword input box 91 is a box in which a word (or a character string) selected as a keyword is displayed. The word displayed in this box is used as the information that provides a reference by which a search operation is executed for associated Web sites. As described above, if "Busy Hour" is selected from among the words displayed in the program detail information display section 72, selected "Busy Hour" is displayed in the keyword input box 91 as described in FIG. 7.

The search start button 92 is operated to start a search operation. The clear button 93 is operated to clear the keyword entered in the keyword input box 91 to redo an input operation.

As shown in FIG. 7, when the search start button 92 is pressed with "Busy Hour" displayed in the keyword input box 91 (namely, when the mouse is clicked with mouse point P positioned on the search start button 92), "Busy Hour" selected at that moment is transmitted to the search server, by which a search operation is executed for Web sites that contain the same word as "Busy Hour", for example. Results of the search operation are obtained by the Web browser of the personal computer to be displayed by the Web browser onto the display monitor.

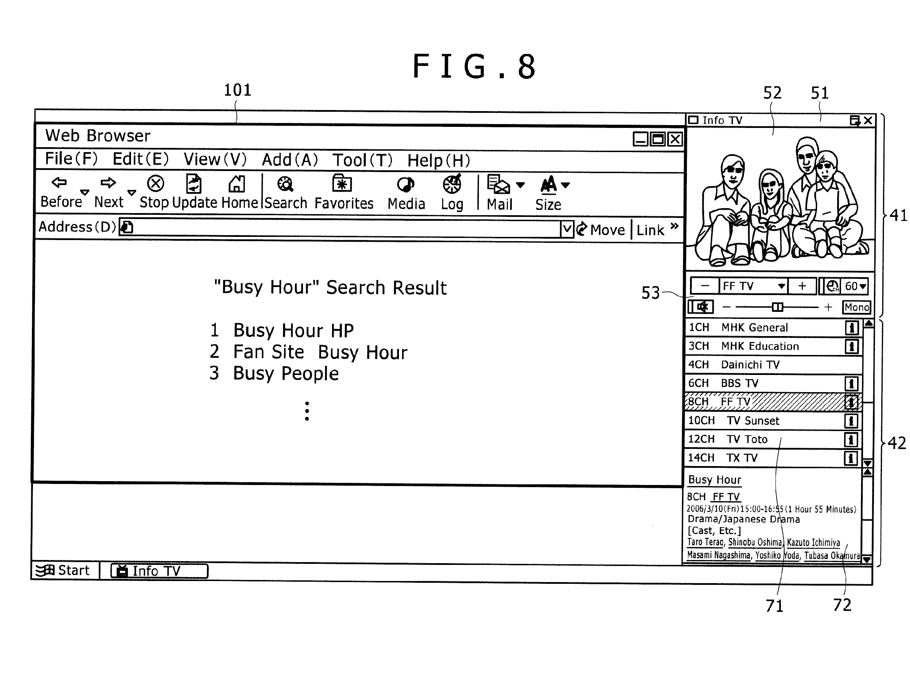

Referring to FIG. 8, there is shown an exemplary screen that is displayed on the display monitor in place of the screen shown in FIG. 6 when the search start button 92 is pressed in the state of the screen shown in FIG. 6.

When the search start button 92 is pressed in the state of the screen shown in FIG. 6 and search results are obtained by the Web browser from the search server, a window 101 is displayed by that Web browser and the obtained search results are displayed in the window 101 as shown in FIG. 8.

In the example shown in FIG. 8, the window 101 is displayed so as not to overlap the window of the info TV application. In the window 101, "Busy Hour HP", "Fan Site Busy Hour", "Busy People", etc. that are Web site information including the same word as "Busy Hour" are displayed as the search results of "Busy Hour".

Character strings "Busy Hour HP", "Fan Site Busy Hour", "Busy People", etc. are each linked with a Web site. Clicking any of these character strings with the mouse, the user can display a screen of the linked Web site onto the window 101. It should be noted that, in the example shown in FIG. 8, the keyword input window 81 is erased upon displaying of the search results.

As described, the user can select a desired word that provides a reference by which a search operation is executed by clicking the mouse. Then, by pressing the search start button 92, the user can search for Web sites associated with the selected word. For example, if the name of program cast is displayed in the program detail information display section 72 and the user wants to know about that cast, the user can click the name displayed in the program detail information display section 72 and click the search start button 92 in the keyword input window 81 to search for a Web site that has the information about the cast.

Namely, in researching program cast, for example, the user need not operate the keyboard to execute operations, such as entering names of cast.

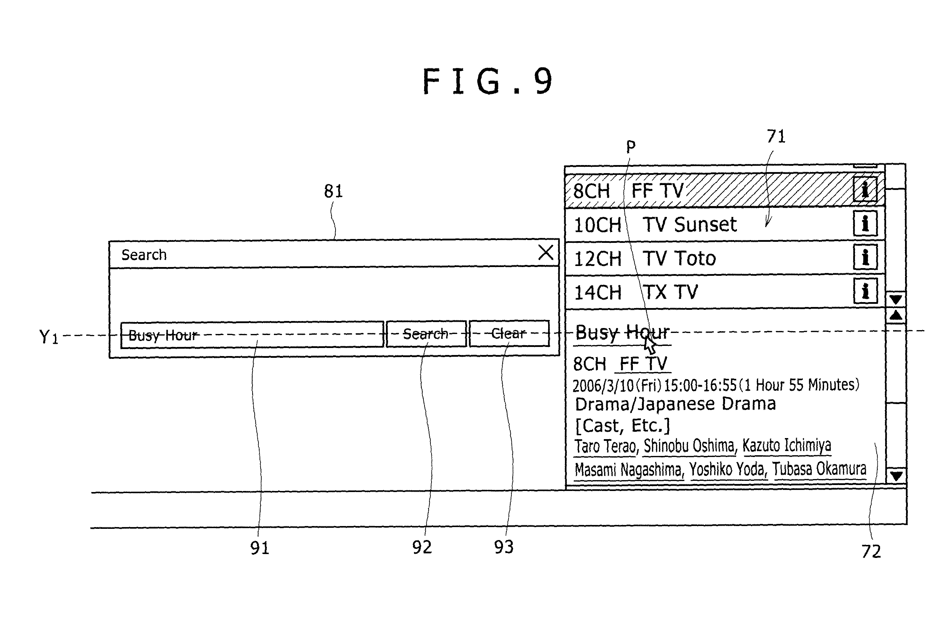

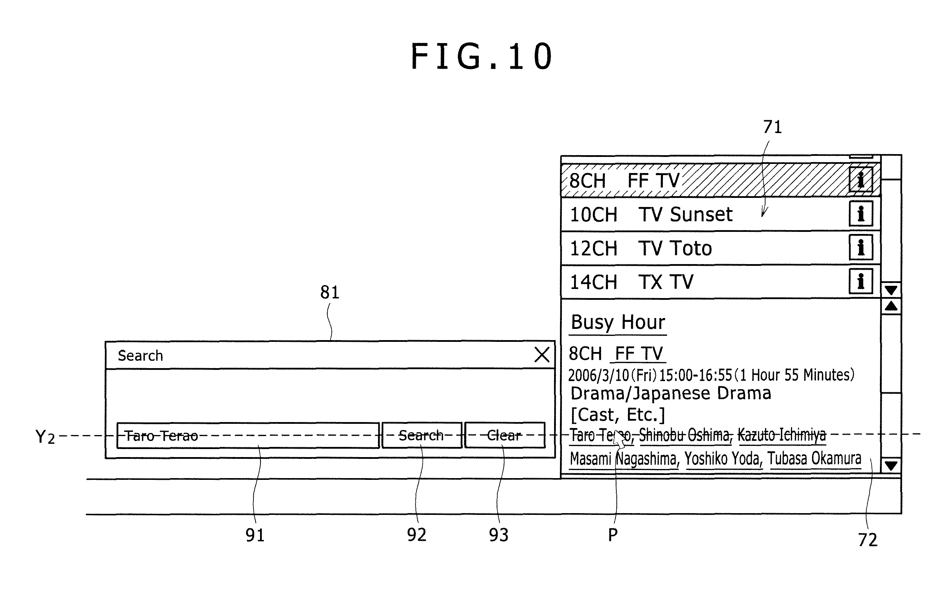

FIGS. 9 and 10 show display positions of the keyword input window 81. These figures expandingly show the peripheral areas of the program detail information display section 72 of the entire screen shown in FIG. 6.

The program detail information display section 72 shown in FIGS. 9 and 10 displays "Busy Hour" that is the above-mentioned program title as a word (an underscored word) selectable by the user, below which the names of cast, such as "Taro Terao", "Shinobu Oshima", etc. are displayed with a broadcast date and other information in between.

If "Busy Hour" is selected by clicking the mouse from among the words displayed in the program detail information display section 72 with no keyword selected and the keyword input window 81 not yet displayed and, if this "Busy Hour" is displayed at a position indicated by Y₁ relative to the bottom line of the display screen as indicated by a dashed line shown in FIG. 9, then the position of the keyword input window 81 is determined so as to display "Busy Hour" of keyword input box 91 at a position indicated by the same Y₁ distance and this "Busy Hour" is displayed at the determined position.

Likewise, if "Taro Terao" is selected by clicking the mouse from among the words displayed in the program detail information display section 72 with no keyword selected and the keyword input window 81 not yet displayed and, if this "Taro Terao" is displayed at a position indicated by Y₂ relative to the bottom line of the display screen as indicated by a dashed line shown in FIG. 10, then the position of the keyword input window 81 is determined so as to display "Taro Terao" of keyword input box 91 at a position indicated by the same Y₂ distance and this "Taro Terao" is displayed at the determined position.

Namely, the keyword input window 81 is displayed such that the keyword input box 91 is displayed at the same level as the user-selected word.

Because "Busy Hour" is displayed above "Taro Terao", selecting "Busy Hour" rather than "Taro Terao" causes the keyword input window 81 to be displayed at a position that is relatively higher on the display screen.

As described, the display position of the keyword input window 81 is determined in accordance with the position of a selected word, thereby making the user need much not move his line of sight. For example, after selecting a predetermined word from among the words displayed in the program detail information display section 72, the user almost always checks whether the selected word is in the keyword input box 91; the movement of the light of sight at this moment (the keyword input window 81 is displayed just beside the selected word) is less often than that when the keyword input window 81 is displayed approximately at the center of the display screen.

The user can select a plurality of keywords only by executing click operations to enter the selected keywords into the keyword input window 81 displayed as described above. This configuration allows the user to execute a search operation on the basis of a plurality of keywords thus entered, thereby attaining a narrowing-down search operation (or a so-called AND search operation) for searching for Web sites associated with all of these key words.

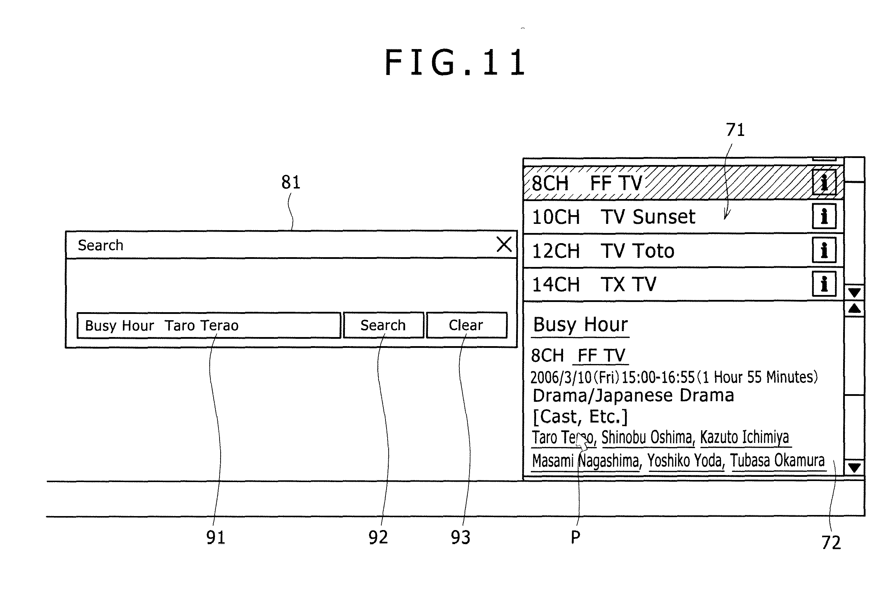

Referring to FIG. 11, there is shown an exemplary display of the keyword input window 81 that is displayed for a narrowing-down search operation.

For example, if "Taro Terao" displayed in the program detail information display section 72 is selected by clicking with "Busy Hour" already selected and displayed in the keyword input box 91, "Taro Terao" is entered in the keyword input box 91 in addition to already selected "Busy Hour".

Pressing the search start button 92 in the state where "Busy Hour" and "Taro Terao" are in the keyword input box 91 shown in FIG. 11 allows the user to search for Web sites associated with both keywords "Busy Hour" and "Taro Terao". When the user presses the search start button 92, keywords "Busy Hour" and "Taro Terao" are transmitted to the search server that executes a specified search operation on the basis of these keywords.

It should be noted that, in FIG. 11, the display position of the keyword input window 81 is the same as that of the keyword input window 81 shown in FIG. 9. When "Busy Hour" is selected from among the words displayed in the program detail information display section 72, the keyword input window 81 is displayed such that "Busy Hour" of the keyword input box 91 is displayed just beside the selected "Busy Hour" and the display position of the keyword input window 81 is still held when "Taro Terao" is subsequently selected. Obviously, it is also practicable that, every time a word is added, the display positions of the keyword input window 81 are switched so as to display "Taro Terao" of keyword input box 91 just beside the subsequently selected "Taro Terao".

As described, the user can enter a plurality of words as keywords that provide search references by successively clicking words displayed in the program detail information display section 72.

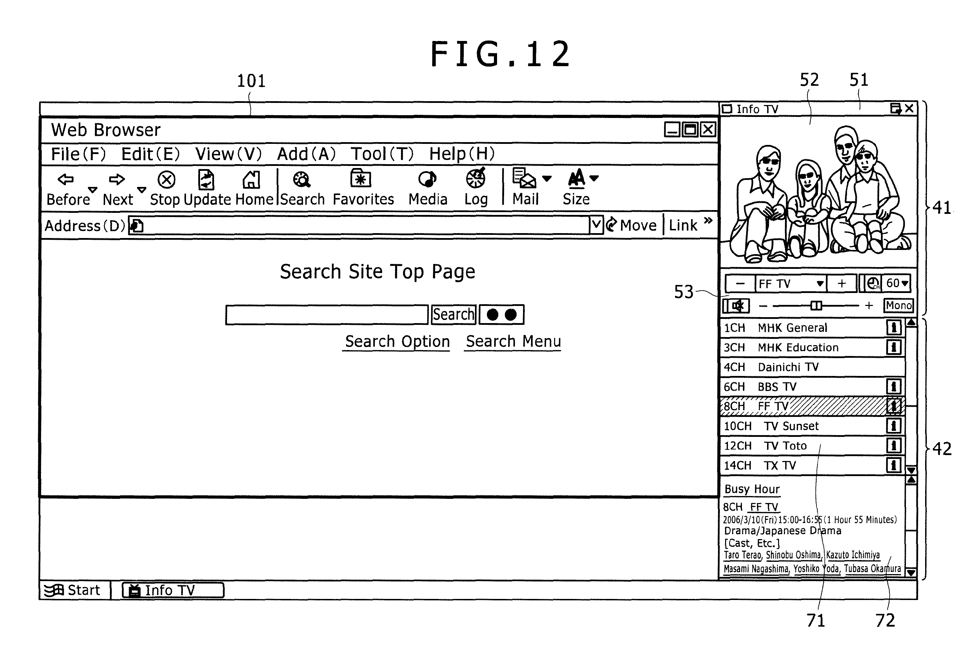

Referring to FIG. 12, there is shown an exemplary screen to be displayed on the display monitor.

For example, when the search start button 92 is pressed with the word in the keyword input box 91 of the keyword input window 81 cleared and therefore no word entered in the keyword input box 91, the Web browser is started up, displaying a Web site screen managed by the search server onto the window 101 displayed by the Web browser.

The processing to be executed by the personal computer 1 for controlling the above-mentioned displaying of screens and windows on the display monitor and the above-mentioned searching operations based on entered keywords will be described later with reference to a flowchart.

Referring to FIG. 13, there is shown a block diagram illustrating an exemplary functional configuration of the personal computer 1. At least some of the functional blocks shown in FIG. 13 are realized by executing the info TV application and the Web browser by the CPU 11 shown in FIG. 1.

As shown in FIG. 13, a display control block 111 and a search block 112 are realized in the personal computer 1.

The display control block 111 controls the displaying that is executed on the display monitor. For example, the display control block 111 displays a window having a configuration shown in FIG. 3 onto the right end of the display monitor on the basis of the video data and EPG data of each program obtained by the tuner 16 and so on.

It is also practicable for the display control block 111 to underscore any word displayed in the program detail information display section 72. In this case, the display control block 111 extracts words, such as personal names and geographical names, which can be used for searching, by analyzing the detail information of each program represented by the EPG data obtained from a predetermined server through the Internet, for example, thereby underscoring the extracted word and displaying the underscored word onto the program detail information display section 72.

Also, when a predetermined word is selected from among the words displayed in the program detail information display section 72, the display control block 111 displays the keyword input window 81 such that the keyword input box 91 is displayed just beside the position at which the selected word is displayed. When another word is successively selected with the above-mentioned word entered in the keyword input box 91, the display control block 111 also displays the subsequently selected word onto the keyword input box 91. When the predetermined number of words have been selected as the keywords for searching and the search start button 92 is pressed with these words entered in the keyword input box 91, the display control block 111 outputs the selected words to the search block 112.

Further, when search results of the Web sites associated with user-selected words have been obtained by the search block 112 and the obtained search results are supplied to the display control block 111, the display control block 111 displays the supplied search results on the display monitor.

The search block 112 controls the communications block 20 to send the words supplied from the display control block 111 to the server, thereby getting the search results of the Web sites associated with the user-selected words. The search block 112 outputs the obtained search results to the display control block 111.

The following describes the search processing to be executed by the personal computer 1 with reference to the flowchart shown in FIG. 14.

This processing is executed when the keyword input window 81 is not displayed, for example. The detail information of a program is already displayed in the program detail information display section 72 of a window displayed by the info TV application, so that the user can select any underscored word as a search keyword.

In step S1, the display control block 111 determines whether the user has selected a predetermined word from among the words displayed in the program detail information display section 72.

If a predetermined word is found selected by the user out of the words displayed in the program detail information display section 72 in step S1, then the display control block 111 goes to step S2 to display the keyword input window 81 and displays the user-selected word onto the keyword input box 91 arranged in the keyword input window 81. The keyword input window 81 is displayed at a position where the keyword input box 91 is displayed just beside the program detail information display section 72 in which the selected word is displayed.

In step S3, the display control block 111 determines whether another predetermined word has been successively selected from among the words displayed in the program detail information display section 72. Before pressing the search start button 92 arranged in the keyword input window 81, the user can add a keyword that provides search reference.

If another predetermined word is found successively selected out of the words displayed in the program detail information display section 72 in step S3, then the display control block 111 goes to step S4 to add the successively selected word to the previously selected word, displaying the added word onto the keyword input box 91 of the keyword input window 81.

If another predetermined word is found not successively selected out of the words displayed in the program detail information display section 72 in step S3, then the processing of step S4 will be skipped.

In step S5, when the search start button 92 of the keyword input window 81 is pressed, the display control block 111 determines whether the execution of a search operation has been specified by the user. If the execution of a search operation is found not specified, then the display control block 111 returns to step S3 to repeat the above-mentioned processing therefrom.

On the other hand, if the execution of a search operation is found specified in step S5, then the display control block 111 goes to step S6. At this moment, the word selected by the user and entered in the keyword input box 91 is outputted from the display control block 111 to the search block 112.

In step S6, the search block 112 controls the communications block 20 to access the search server and, by transmitting the user-selected word thereto, search for Web sites associated with the user-selected word. The search block 112 obtains the results of the search executed by the search server and outputs the obtained search results to the display control block 111.

In step S7, on the basis of the information supplied from the search block 112, the display control block 111 displays the search results, ending the processing. For example, a list of Web sites that contain the same word as the user-selected word is displayed, from which the user can select any necessary Web site. When the user selects the Web site, the screen of the selected Web site is displayed in the window of the Web browser displayed on the display monitor.

As described, by checking the detail information of each program, the user can select any word of interest by clicking to easily display a window with the selected word entered in the input box thereof.

Also, by pressing the search start button, the user can easily start a search operation for Web sites, for example, from the state of checking the detail information of each program.

In the above-described novel configurations, the video to be displayed on the video display section 52 is the video of a broadcast program or the video of a program obtained from a predetermined server over the Internet; it is also practicable for the video display section 52 to display the video of a program recorded to the personal computer 1 or the video of the content recording to a DVD loaded on the personal computer 1.

The above-described processing of switching between the display positions of program video images can also be executed on any content video displaying devices, such as television receivers and mobile phones, in addition to personal computers.

In the above-described embodiments of the invention, the information subject to searching is Web sites; it is also practicable to search for various information other than Web sites, such as words associated with the user-selected words, for example.

The above-mentioned sequence of processing operations may be executed by software as well as hardware. When the above-mentioned sequence of processing operations is executed by software, the programs constituting the software are installed in a computer which is built in dedicated hardware equipment or installed, from a network or recording media, into a general-purpose personal computer for example in which various programs may be installed for the execution of various functions.

As shown in FIG. 1, program recording media for storing programs that are installed on a computer for execution is made up of the removable media 22 that are package media made up of a magnetic disc (including a flexible disc), an optical disc (including CD-ROM (Compact Disc-Read Only Memory), a DVD (Digital Versatile Disc), a magneto-optical disc, or a semiconductor memory, the ROM 12 in which programs are temporarily or permanently stored, or a hard disc drive that forms the storage block 19. Storing of programs into program recording media is executed by use of wired or wireless communication media, such as a LAN, the Internet, or digital satellite broadcasting, via the communication block 20 that provides an interface, such as a router and a modem, as occasion demand.

It should be noted herein that the steps for describing each program recorded in recording media include not only the processing operations which are sequentially executed in a time-dependent manner but also the processing operations which are executed concurrently or discretely.

While preferred embodiments of the present invention have been described using specific terms, such description is for illustrative purpose only, and it is to be understood that changes and variations may be made without departing from the spirit or scope of the following claims.

## Claims

1. An information processing apparatus (1) comprising:
a display controller (111) configured to display a first window that includes an information display area in which information associated with content is displayed and a second window having an input box for entering search reference information in the proximity of said first window when predetermined information is selected from said information displayed in said information display area, thereby displaying said selected predetermined information into said input box.

2. The information processing apparatus (1) according to claim 1, wherein said display controller (111) displays said first window that further includes a video display area in which a video of said content is displayed.

3. The information processing apparatus (1) according to claim 1 or 2, wherein said information displayed in said information display area is a word,
said information processing apparatus (1) further comprising:
a searcher (112) configured to search for information associated with said word displayed in said input box by said display controller.

4. The information processing apparatus (1) according to claim 1, 2, or 3, if another piece of information is selected from said information displayed in said information display area with said second window displayed, said display controller (111) displays said selected another piece of information into said input box along with said previously selected predetermined information.

5. The information processing apparatus (1) according to claim 4, wherein said information displayed in said information display area is a word,
said information processing apparatus (1) further comprising:
a searcher configured to search for information associated with both of said word previously displayed in said input box by said display controller and said word subsequently displayed in said input box.

6. An information processing method comprising the steps of:
displaying a first window that includes an information display area in which information associated with content is displayed;
displaying a second window having an input box for entering search reference information in the proximity of said first window when predetermined information is selected from said information displayed in said information display area; and
displaying said selected predetermined information into said input box.

7. A program configured to make a computer execute the steps of:
displaying a first window that includes an information display area in which information associated with content is displayed;
displaying a second window having an input box for entering search reference information in the proximity of said first window when predetermined information is selected from said information displayed in said information display area; and
displaying said selected predetermined information into said input box.
